# EUROPÄISCHE PATENTSCHRIFT

(11) **EP 3 919 802 B1**
(45) Veröffentlichungstag und Bekanntmachung des Hinweises auf die Patenterteilung: **22.10.2025**
(21) Anmeldenummer: 21174804.1
(22) Anmeldetag: 19.05.2021
(51) Int. Cl.: F17C 5/00

(54) **VORRICHTUNG ZUR ÜBERPRÜFUNG EINES TANKVORGANGS AN EINER H2-TANKSTELLE**
DEVICE FOR CHECKING A FUELLING PROCEDURE AT A H2 FUEL STATION
DISPOSITIF DE VÉRIFICATION D'UN PROCESSUS DE RAVITAILLEMENT DANS UNE STATION DE RAVITAILLEMENT EN H2

(30) Priorität: 05.06.2020 DE 102020115080
(43) Veröffentlichungstag der Anmeldung: 08.12.2021
(73) Patentinhaber: Westenergie AG, 45128 Essen (DE)
(72) Erfinder: Herr, Stefan, 40477 Düsseldorf (DE); Kledewski, Ingo, 44319 Dortmund (DE)
(74) Vertreter: Bals & Vogel Patentanwälte PartGmbB

(56) Entgegenhaltungen:
- WO-A1-2007/059781
- DE-A1- 102018 104 759
- FR-A1- 3 079 907
- US-B2- 8 757 223
- US-B2- 9 873 408

## Beschreibung

Die vorliegende Erfindung betrifft eine Vorrichtung zur Überprüfung eines Tankvorgangs an einer H₂-Tankstelle. Ferner bezieht sich die Erfindung auf ein System sowie ein Verfahren zur Überprüfung eines Tankvorgangs an einer H₂-Tankstelle.

Neben der Elektromobilität und der Verwendung von elektrischen Energiespeichern ist Wasserstoff der wohl wichtigste und vielversprechendste Energieträger für eine umweltfreundliche und nachhaltige Mobilität. Fahrzeuge, die mit Hilfe von Wasserstoff angetrieben werden, müssen - genau wie benzinbetriebene Fahrzeuge mit Benzin - an Tankstellen mit Wasserstoff betankt werden.

Beim Tanken von Wasserstoff besteht aufgrund der spezifischen Eigenschaften des Wasserstoffs ein stark erhöhtes Risiko. So kann Wasserstoff - im Gegensatz zu Benzin- oder Dieseltreibstoffen - relativ leicht durch verschiedenste Oberflächen diffundieren. Zudem ist Wasserstoff extrem leicht entzündlich und explosiv. Darüber hinaus wird bei der Lagerung und Befüllung aufgrund des Dampfdrucks von Wasserstoff ein deutlich höherer Druck verwendet, als bei Benzin- oder Dieseltreibstoffen.

Aufgrund dieses bekannten erhöhten Risikos, wurden bzw. werden Tankvorgänge zur Betankung von Wasserstoff in Japan häufig nur durch ausgebildete Ingenieure durchgeführt, was den Nachteil besitzt, dass nur kostenintensiveres Personal mit einer entsprechenden Ausbildung zur Ausführung der Tankvorgänge eingesetzt werden kann.

Eine automatische Tankvorrichtung zum Auftanken von H₂-betriebenen Tankfahrzeugen ist aus WO2007/059781A1 bekannt.

Aus der DE 10 2012 024 865 A1 ist ferner auch ein Befüllroboter für Fahrzeuge, die mit Wasserstoff angetrieben werden, bekannt. Nachteilig an der Verwendung eines Befüllroboters zur Befüllung der Tanks von wasserstoffbetriebenen Fahrzeugen sind jedoch insbesondere sicherheitstechnische Aspekte, die durch die Verwendung des bekannten Befüllroboters nicht behoben werden können.

Es ist daher die Aufgabe der vorliegenden Erfindung, die voranstehend beschriebenen Nachteile zumindest teilweise zu beheben. Insbesondere ist es die Aufgabe der Erfindung, eine einfache, schnelle und kostengünstige Betankung von wasserstoffbetriebenen Fahrzeugen zur Verfügung zu stellen, die insbesondere höchste Sicherheitsanforderungen erfüllt.

Die voranstehende Aufgabe wird gelöst durch eine Vorrichtung zur Überprüfung eines Tankvorgangs an einer H₂-Tankstelle mit den Merkmalen des Anspruchs 1, ein System zur Überprüfung eines Tankvorgangs an einer H₂-Tankstelle mit den Merkmalen des Anspruchs 9 sowie durch ein Verfahren zur Überprüfung eines Tankvorgangs an einer H₂-Tankstelle mit den Merkmalen des Anspruchs 12. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Vorrichtung beschrieben sind, selbstverständlich auch im Zusammenhang mit dem erfindungsgemäßen System sowie dem erfindungsgemäßen Verfahren, und jeweils umgekehrt, sodass bezüglich der Offenbarung zu den einzelnen Erfindungsaspekten stets wechselseitig Bezug genommen wird bzw. werden kann.

Erfindungsgemäß ist eine Vorrichtung zur Überprüfung eines Tankvorgangs an einer H₂-Tankstelle vorgesehen. Hierbei umfasst die erfindungsgemäße Vorrichtung eine Basiseinheit zur Anordnung der Vorrichtung an einem Untergrund, vorzugsweise in der Nähe zu der H₂-Tankstelle, eine an der Basiseinheit angeordnete bewegbare Überprüfungseinheit zur Überprüfung einer Verbindung zwischen einem Zapfventil der H₂-Tankstelle und einer Tanköffnung eines wasserstoffbetriebenen Fahrzeugs, wobei die bewegbare Überprüfungseinheit einen Sensor umfasst, mittels dem eine nicht ordnungsgemäße Verbindung zwischen dem Zapfventil der H₂-Tankstelle und der Tanköffnung des wasserstoffbetriebenen Fahrzeugs erkennbar ist.

Die gegenständliche Vorrichtung kann dabei insbesondere zur Überprüfung eines Tankvorgangs von wasserstoffbetriebenen Kraftfahrzeugen, wie beispielsweise wasserstoffbetriebenen PKWs oder LKWs vorgesehen sein. Ebenso ist allerdings auch eine Überprüfung von Tankvorgängen für Schiffe, Flugobjekte oder auch stationäre Systeme denkbar. Unter einer Basiseinheit wird gegenständlich eine Befestigungseinheit, wie ein Fundament, ein Sockel oder ein Standfuß oder dergleichen verstanden, über den die gegenständliche Vorrichtung zumindest zeitweilig an einem Untergrund fixierbar ist. Unter einer Nähe zu einer H₂-Tankstelle kann ferner insbesondere ein Abstand von mehreren Metern, beispielsweise von 1-10 m, insbesondere 2-5 m verstanden werden. Unter einer nicht ordnungsgemäßen Verbindung zwischen dem Zapfventil einer H₂-Tankstelle und der Tanköffnung eines wasserstoffbetriebenen Fahrzeugs wird im Rahmen der Erfindung insbesondere eine unzureichend dichtende Verbindung verstanden, die bei einer Überführung von Wasserstoff aus der H₂-Tankstelle in ein wasserstoffbetriebenes Fahrzeug eine Leckage verursachen würde. Unter einer Leckage kann hierbei vorzugsweise ein Druckverlust von mehr als 1 mbar Wasserstoff, besonders bevorzugt von mehr als 100 mbar Wasserstoff, insbesondere ein Druckverlust von mehr als 1 bar Wasserstoff pro Tankvorgang (aufgrund der unzureichend dichtenden Verbindung) verstanden werden.

Im Hinblick auf eine möglichst freie Bewegbarkeit der Überprüfungseinheit, insbesondere in Richtung eines wasserstoffbetriebenen Fahrzeugs, ist erfindungsgemäß vorteilhafterweise vorgesehen, dass die Überprüfungseinheit zumindest zwei miteinander verbundene Verbindungselemente zur Minimierung eines Abstandes zu dem wasserstoffbetriebenen Fahrzeug aufweist, wobei der Sensor der Überprüfungseinheit vorzugsweise an und/oder in einem der zumindest zwei miteinander verbundenen Verbindungselemente angeordnet ist. Vorzugsweise ist der Sensor hierbei an dem äußersten Verbindungselement angeordnet, d.h. an dem Verbindungselement, das bei einer Minimierung des Abstandes zu einem wasserstoffbetriebenen Fahrzeug den geringsten Abstand zu dem Fahrzeug aufweist, sodass ein Tankvorgang vorzugsweise aus nächster Nähe überwacht werden kann.

Im Rahmen einer möglichst frei bewegbaren Überprüfungseinheit in Kombination mit einer möglichst kompakten Anordnung ist vorgesehen, dass die Verbindungselemente unabhängig voneinander in ihrer Position unabhängig gegeneinander drehbar gelagert sind. Neben einer drehbaren Lagerung kann auch vorgesehen sein, dass die Verbindungselemente ineinander einschiebbar sind, beispielsweise in Form von Schubladen oder dergleichen. Im Rahmen einer besonders großen Bewegungsfreiheit kann dabei vorgesehen sein, dass die Verbindungselemente zumindest in X- und Y-, vorzugsweise in X-, Y- und Z-Richtung bewegbar ausgebildet sind.

Im Rahmen einer besonders effektiven und komfortablen Ausführung einer Vorrichtung zur Überprüfung eines Tankvorgangs kann erfindungsgemäß ferner vorgesehen sein, dass die Vorrichtung als Roboter ausgebildet ist, wobei der Roboter neben einer Überprüfung eines Tankvorgangs an einer H₂-Tankstelle auch zur zumindest teilweisen Durchführung eines Tankvorgangs zur Betankung mit Wasserstoff, insbesondere zur Kopplung und Entkopplung des Zapfventils an eine Tanköffnung eines wasserstoffbetriebenen Fahrzeugs vorgesehen ist. Unter einem Roboter wird hierbei insbesondere ein universell einsetzbarer Bewegungsautomat mit vorzugsweise mehreren Achsen verstanden, dessen Bewegungen hinsichtlich Bewegungsfolge und Wegen bzw. Winkeln frei (das heißt ohne mechanischen bzw. menschlichen Eingriff) programmierbar und gegebenenfalls sensorgeführt sein können.

Der Roboter kann dabei vorzugsweise mit Greifern, Werkzeugen oder anderen Fertigungsmitteln ausrüstbar sein und Handhabungs- und/oder Fertigungsaufgaben ausführen. Somit kann bei einer gegenständlichen Ausführung der erfindungsgemäßen Vorrichtung, in der die Vorrichtung als Roboter ausgebildet ist, insbesondere vorgesehen sein, dass mehr als ein Sensor, vorzugsweise eine Vielzahl von Sensoren an der Vorrichtung bzw. dem Roboter angeordnet ist.

Im Rahmen einer möglichst großen Bewegungsfreiheit der gegenständlichen Vorrichtung kann zudem vorzugsweise vorgesehen sein, dass die Vorrichtung Bewegungselemente zur Bewegung der Basiseinheit relativ zu einer H₂-Tankstelle und/oder einem wasserstoffbetriebenen Fahrzeug aufweist, wobei die Bewegungselemente vorzugsweise in Form von Füßen oder Rollen oder dergleichen ausgebildet sind. So kann die Vorrichtung beispielsweise in Form eines Roboters ausgebildet sein, der eine Mehrzahl von Bewegungsfreiheitsgraden aufweist und neben einer Möglichkeit der Ansteuerung von Verbindungselementen auch die Möglichkeit einer Bewegung der Basiseinheit, beispielsweise relativ zu einem wasserstoffbetriebenen Fahrzeug bzw. relativ zu einer H₂-Ladestation besitzt.

Im Rahmen einer möglichst zuverlässigen Erkennung selbst marginal vom Optimum abweichender Verbindungen zwischen einem Zapfventil einer H₂-Tankstelle und einer Tanköffnung eines wasserstoffbetriebenen Fahrzeugs kann gegenständlich ferner vorgesehen sein, dass der Sensor in Form eines Drucksensors und/oder eines Drehmomentsensors und/oder eines Kontaktsensors und/oder eines optischen Sensors ausgebildet ist. Ein festsitzendes Zapfventil, das ordnungsgemäß an eine Tanköffnung bzw. einen Tankdeckel angeschlossen ist, ist dabei zur Durchführung eines H₂-Tankvorgangs zwingend notwendig. Um dies zu gewährleisten, kann wenn der Sensor in Form eines Drucksensors ausgebildet ist, mit Hilfe des mechanischen Drucks festgestellt werden, ob das Zapfventil fest auf dem Tankdeckel "sitzt" bzw. eine Tanköffnung fest verschließt. Ein als Drucksensor ausgebildeter Sensor ist ebenfalls vorteilhaft, wenn es sich bei dem zu betankenden Fahrzeug beispielsweise um ein Schiff handelt. Mit Hilfe des durch den Drucksensor erfassten Druckes können dann mögliche Bewegungen eines Schiffes detektiert werden und das Zapfventil dementsprechenden nachgeregelt bzw. nachbewegt werden.

Ein als ein Drehmomentsensor ausgebildeter Sensor bietet sich dagegen insbesondere bei einem in Form eines Bajonettverschlusses ausgebildeten Tankverschluss an. Mit Hilfe eines solchen Sensors ist es insbesondere möglich, festzustellen, ob das Zapfventil an der Tanköffnung bzw. einem Tankdeckel des Fahrzeugs eingerastet ist. Ein nicht eingerastetes Zapfventil kann in einem solchen Fall - wie bereits zuvor erwähnt - eine nicht ordnungsgemäße Verbindung zwischen dem Zapfventil der H₂-Tankstelle und der Tanköffnung des wasserstoffbetriebenen Fahrzeugs darstellen. Alternativ oder zusätzlich kann ein korrekter Anschluss des Zapfventils über ein Drehmoment mittels eines Drehmomentsensors festgestellt werden. Wenn beispielsweise ein vorher bestimmtes Drehmoment von dem als Drehmomentsensor ausgebildeter Sensor nicht gemessen bzw. erfasst wird, dann wird eine nicht ordnungsgemäße Verbindung zwischen dem Zapfventil der H₂-Tankstelle und der Tanköffnung des wasserstoffbetriebenen Fahrzeugs erkannt. Mittels eines als Kontaktsensor ausgebildeten Sensors kann zudem beispielsweise überprüft werden, ob Rastelemente im Zapfventil oder Tankdeckel "eingerastet" sind (dies entspräche einem korrekten Anschluss) oder noch nicht eingerastet sind. Ein nicht eingerastetes Zapfventil kann insbesondere eine nicht ordnungsgemäße Verbindung zwischen dem Zapfventil der H₂-Tankstelle und der Tanköffnung des wasserstoffbetriebenen Fahrzeugs darstellen. Ein optischer Sensor kann ferner insbesondere in Form einer Kamera ausgebildet sein. In einer solcher Ausführungsform kann beispielsweise eine nicht ordnungsgemäße Verbindung zwischen dem Zapfventil der H₂-Tankstelle und der Tanköffnung des wasserstoffbetriebenen Fahrzeugs durch eine Bildauswertung des optischen Sensors durchgeführt werden. Die Bildauswertung des optischen Sensors kann vorzugsweise maschinell erfolgen. In einer Ausführungsform, in der der Sensor als Kamera ausgebildet ist, kann die gegenständliche Vorrichtung vorzugsweise auch dazu ausgebildet sein, das Zapfventil zu führen bzw. zu bewegen. In einer solchen Ausführungsform ist es damit nicht nur möglich, einen ordnungsgemäßen Anschluss des Ventils optisch, mit Hilfe des Kamerasensors zu überprüfen, sondern auch gegebenenfalls eine optisch kontrollierte Korrektur einer Positionierung vorzunehmen. Durch eine zusätzliche optische Kontrolle können zudem mehrere Faktoren bei einem Anschluss kontrolliert werden, was eine erhöhte Sicherheit bietet. Neben einer Steuerung eines Verbindungselementes mit Hilfe eines an einem Verbindungselement angeordneten Kamerasensors, kann gegenständlich auch vorgesehen sein, die gesamte Überprüfungseinheit, insbesondere einen Roboter mit Hilfe des Kamerasensors zu steuern.

Im Hinblick auf eine besonders sichere, insbesondere manipulationsstabile Ausführung der gegenständlichen Vorrichtung zur Überprüfung eines Tankvorgangs an einer H₂-Tankstelle kann gegenständlich ferner vorgesehen sein, dass der Sensor in Form eines sicherheitsgerichteten Sensors ausgebildet ist, wobei der Sensor insbesondere die Sicherheitsanforderungen an die Sicherheitsnorm IEC61508-1 erfüllt. Eine derartige Sicherheitsanforderung kann beispielsweise dadurch implementiert sein, dass der Sensor eine Redundanz aufweist oder zweikanalig ausgebildet ist, sodass er jederzeit in einen sicheren Zustand überführt werden kann. Die Auswertung des Sensors kann dann beispielsweise durch eine sogenannte Sicherheitssteuerung durchgeführt werden. Die Sicherheitssteuerung kann zudem auch selbst eine Redundanz oder eine Zweikanaligkeit aufweisen, um mögliche sicherheitsbedingte Anforderungen zu erfüllen.

Idealerweise wird die Auswertung des Sensors dabei von der Sicherheitssteuerung durchgeführt, welche ebenfalls die Bewegungen der Vorrichtung bzw. des Roboters kontrolliert bzw. steuert.

Um auch bei schlechten Lichtverhältnissen eine nicht ordnungsgemäße Verbindung zwischen einem Zapfventil einer H₂-Tankstelle und einer Tanköffnung eines wasserstoffbetriebenen Fahrzeugs detektieren zu können, kann erfindungsgemäß ferner vorgesehen sein, dass eine Beleuchtungseinheit vorhanden ist, wobei die Beleuchtungseinheit vorzugsweise an einem der Verbindungselemente der Überprüfungseinheit angeordnet ist, wobei die Beleuchtungseinheit insbesondere als LED ausgebildet ist. Bei einer solchen Ausführung ist es beispielsweise möglich, auch nach innen liegende Zapfanschlüsse ausreichend gut zu beleuchten.

Ebenfalls Gegenstand der Erfindung ist ferner ein System zur Überprüfung eines Tankvorgangs an einer H₂-Tankstelle. Hierbei umfasst das erfindungsgemäße System eine H₂-Tankstelle und eine voranstehend beschriebene Vorrichtung. Die H₂-Tankstelle weist hierbei eine Zapfsäule zur Bereitstellung von Wasserstoff und einen Gasschlauch mit einem Zapfventil zur Überführung von Wasserstoff aus der Zapfsäule in die Tanköffnung eines wasserstoffbetriebenen Fahrzeugs auf. Die Vorrichtung zur Überprüfung eines Tankvorgangs an der H₂-Tankstelle umfasst ferner einen Sensor, mittels dem eine nicht ordnungsgemäße Verbindung zwischen dem Zapfventil der H₂-Tankstelle und einer Tanköffnung des wasserstoffbetriebenen Fahrzeugs erkennbar ist. Damit weist das erfindungsgemäße System die gleichen Vorteile auf, wie sie bereits ausführlich in Bezug auf die erfindungsgemäße Vorrichtung zur Überprüfung eines Tankvorgangs erläutert worden sind. Neben einer reinen Überprüfung eines Tankvorgangs kann das gegenständliche System zudem auch zur zumindest teilweisen Durchführung eines Tankvorgangs zur Betankung mit Wasserstoff, insbesondere zur Kopplung und Entkopplung eines Zapfventils an eine bzw. von einer Tanköffnung eines wasserstoffbetriebenen Fahrzeugs geeignet und vorgesehen sein.

Im Rahmen einer möglichst allumfassenden Überprüfung sowie zur Unterstützung eines Tankvorgangs an einer H₂-Tankstelle ist es ebenfalls denkbar, dass eine externe Kamera zur Überprüfung eines Tankvorgangs an einer H₂-Tankstelle und/oder zur Kopplung und Entkopplung des Zapfventils mit bzw. von der Tanköffnung eines wasserstoffbetriebenen Fahrzeugs vorgesehen ist. Die externe Kamera kann zudem auch zur Überprüfung anderer sicherheitsrelevanter Aspekte vorgesehen sein, wie beispielsweise zur Überprüfung des Gasschlauches der H₂-Tankstelle zur Verhinderung einer übermäßigen und unsachgemäßen Belastung des Gasschlauches oder dergleichen. Bei einer Kopplung und Entkopplung des Zapfventils mit der bzw. von der Öffnung bzw. dem Tankdeckel eines wasserstoffbetriebenen Fahrzeugs kann die Kamera insbesondere zur Steuerung von Bewegungen der Vorrichtung zur Überprüfung eines Tankvorgangs, bei einer entsprechenden Ausführung insbesondere zur Steuerung des Roboters vorgesehen sein und somit ein automatisiertes Tanken von Wasserstoff ermöglichen. Eine Kamera-geführte Steuerung mit einer externen Kamera hat zudem den Vorteil, dass nicht notwendigerweise ein Sensor zur Überprüfung eines Tankvorgangs vorgesehen sein muss, sodass auf die Gefahr, eine Spannungsquelle zumindest zeitweilig nahe des Zapfventils positionieren zu müssen, verzichtet werden kann.

Um einem Nutzer die aktuelle Abgabemenge bzw. gegebenenfalls den aktuellen Preis für einen Tankvorgang mitzuteilen, kann es zudem vorteilhaft sein, wenn ein Gaszähler zum Bereitstellen einer Gasabgabe-Informationen über die beim Tankvorgang abgegebene Gasmenge vorgesehen ist. Ebenso kann im Hinblick auf eine Erhöhung der Sicherheit des gegenständlichen Systems erfindungsgemäß vorgesehen sein, dass eine Identifizierungsvorrichtung zum Bereitstellen einer Identitätsinformation des Nutzers vorhanden ist.

Ebenfalls Gegenstand der Erfindung ist ferner ein Verfahren zur Überprüfung eines Tankvorgangs an einer H₂-Tankstelle, unter Verwendung einer voranstehend beschriebenen Vorrichtung, insbesondere unter Verwendung eines voranstehend beschriebenen Systems.

Hierbei umfasst das erfindungsgemäße Verfahren die Schritte des Erkennens einer Anfrage zur Durchführung eines Tankvorgangs eines wasserstoffbetriebenen Fahrzeugs an einer H₂-Tankstelle, eines Ansteuerns einer Überprüfungseinheit zur Minimierung eines Abstandes der Überprüfungseinheit zu einem an einer Tanköffnung des wasserstoffbetriebenen Fahrzeugs angeordneten Zapfventil der H₂-Tankstelle sowie eines Überprüfens einer Verbindung zwischen dem Zapfventil der H₂-Tankstelle und der Tanköffnung des wasserstoffbetriebenen Fahrzeugs vor Beginn der Durchführung des Tankvorgangs. Damit weist das erfindungsgemäße Verfahren die gleichen Vorteile auf, wie sie bereits ausführlich in Bezug auf die erfindungsgemäße Vorrichtung bzw. das erfindungsgemäße System zur Überprüfung eines Tankvorgangs beschrieben worden sind.

Im Rahmen einer besonders zuverlässigen und aussagekräftigen Beurteilung hinsichtlich der Güte einer Verbindung zwischen einem Zapfventil einer H₂-Tankstelle und einer Tanköffnung eines wasserstoffbetriebenen Fahrzeugs kann gegenständlich vorteilhafterweise ferner vorgesehen sein, dass das Ansteuern der Überprüfungseinheit zur Minimierung des Abstands der Überprüfungseinheit zu einem an einer Tanköffnung des wasserstoffbetriebenen Fahrzeugs angeordneten Zapfventil der H₂-Tankstelle ein Kontaktieren des Zapfventils durch die Überprüfungseinheit umfasst. Bei einem derartigen minimalen Abstand ist insbesondere eine besonders zuverlässige Überprüfung einer Verbindung zwischen einem Zapfventil einer H₂-Tankstelle und einer Tanköffnung eines wasserstoffbetriebenen Fahrzeugs möglich.

Im Rahmen der Erhöhung der Sicherheit ist es ferner denkbar, dass in Abhängigkeit der Überprüfung einer Verbindung zwischen dem Zapfventil der H₂-Tankstelle und der Tanköffnung des wasserstoffbetriebenen Fahrzeugs ein Tankvorgang freigegeben oder abgebrochen wird.

Um im Falle einer zu optimierenden Verbindung zwischen einem Zapfventil einer H₂-Tankstelle und einer Tanköffnung eines wasserstoffbetriebenen Fahrzeugs schnell und komfortabel Abhilfe schaffen zu können, kann gegenständlich ferner vorgesehen sein, dass neben einem Überprüfen eines Tankvorgangs an einer H₂-Tankstelle ein Kuppeln und Entkuppeln eines Zapfventils der H₂-Tankstelle mit oder von der Tanköffnung des wasserstoffbetriebenen Fahrzeugs erfolgt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Hierbei können die in den Ansprüchen und in der Beschreibung erwähnten Merkmale jeweils einzeln für sich oder in beliebiger Kombination erfindungswesentlich sein.

Es zeigen:
- Fig. 1: eine schematische Darstellung eines Systems zur Überprüfung eines Tankvorgangs an einer H₂-Tankstelle gemäß einem ersten Ausführungsbeispiel in einem ersten Zustand,
- Fig. 2: eine schematische Darstellung eines Systems zur Überprüfung eines Tankvorgangs an einer H₂-Tankstelle gemäß einem ersten Ausführungsbeispiel in einem zweiten Zustand,
- Fig. 3: eine schematische Darstellung eines Systems zur Überprüfung eines Tankvorgangs an einer H₂-Tankstelle gemäß einem zweiten Ausführungsbeispiel in einem zweiten Zustand,
- Fig. 4: eine schematische Darstellung der einzelnen Schritte eines erfindungsgemäßen Verfahrens zur Überprüfung eines Tankvorgangs an einer H₂-Tankstelle gemäß einem ersten Ausführungsbeispiel.

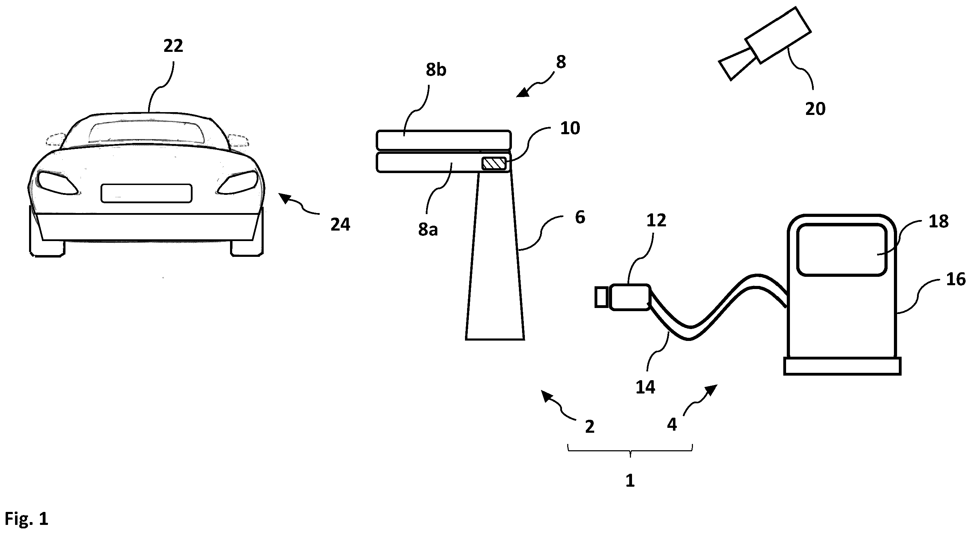

Fig. 1 zeigt eine schematische Darstellung eines Systems 1 zur Überprüfung eines Tankvorgangs an einer H₂-Tankstelle 4 gemäß einem ersten Ausführungsbeispiel in einem ersten Zustand.

Das gegenständliche System 1 zur Überprüfung eines Tankvorgangs umfasst hierbei eine H₂-Tankstelle 4 sowie eine Vorrichtung 2 zu Überprüfung eines Tankvorgangs an der H₂-Tankstelle 4. Die H₂-Tankstelle 4 weist hierbei gemäß dem Ausführungsbeispiel aus Fig. 1 eine Zapfsäule 16 zur Bereitstellung von Wasserstoff, einen Gasschlauch 14 mit einem Zapfventil 12 zur Überführung des Wasserstoffs aus der Zapfsäule 16 in eine Tanköffnung 24 eines wasserstoffbetriebenen Fahrzeugs 22 auf. Die Vorrichtung 2 zur Überprüfung eines Tankvorgangs umfasst ferner eine Basiseinheit 6 zur Anordnung der Vorrichtung 2 an einem Untergrund, vorzugsweise in der Nähe zu der H₂-Tankstelle 4, eine an der Basiseinheit 6 angeordnete bewegbare Überprüfungseinheit 8 zur Überprüfung einer Verbindung zwischen dem Zapfventil 12 der H2-Tankstelle 4 und einer Tanköffnung 24 eines wasserstoffbetriebenen Fahrzeugs 22, wobei die bewegbare Überprüfungseinheit 8 zusätzlich einen Sensor 10 umfasst, mittels dem eine nicht ordnungsgemäße Verbindung zwischen dem Zapfventil 12 der H₂-Tankstelle 4 und der Tanköffnung 24 des wasserstoffbetriebenen Fahrzeugs 22 erkennbar ist.

Gemäß dem in Fig. 1 gezeigten Ausführungsbeispiel befindet sich das gegenständliche System 1 in einem Zustand, in dem die H₂-Tankstelle 4 noch nicht an das wasserstoffbetriebene Fahrzeug 22 gekoppelt ist.

Wie vorliegend erkennbar, weist die Überprüfungseinheit 8 der Vorrichtung 2 zur Überprüfung eines Tankvorgangs ein erstes und zweites miteinander verbundenes Verbindungselement 8a, 8b auf, die zur Minimierung eines Abstandes der Überprüfungseinheit 8 zu dem benachbart angeordneten wasserstoffbetriebenen Fahrzeug 22 vorgesehen sind. Die Verbindungselement 8a, 8b sind hierbei unabhängig voneinander in ihrer Position variierbar, vorliegend gegeneinander drehbar gelagert.

Die Vorrichtung 2 kann hierbei vorteilhafter Weise auch in Form eines Roboters oder dergleichen ausgebildet sein, der neben einer Überprüfung eines Tankvorgangs an der H₂-Tankstelle 4 auch zur zumindest teilweisen Durchführung eines Tankvorgangs zur Betankung mit Wasserstoff, insbesondere zur Kopplung und Entkopplung des Zapfventils 12 an eine bzw. von einer Tanköffnung 24 des wasserstoffbetriebenen Fahrzeugs 22 vorgesehen ist.

Im Rahmen einer möglichst großen Bewegungsfreiheit kann zudem wahlweise auch vorgesehen sein, dass die Vorrichtung 2 zusätzlich in dieser Ausführungsform nicht dargestellte Bewegungselemente 26 zur Bewegung der Basiseinheit 6 aufweist, die beispielsweise in Form von Füßen oder Rollen ausgebildet sein können.

Der vorliegend innerhalb des Verbindungselementes 8a angeordnete Sensor 10, der zur Erkennung einer nicht ordnungsgemäßen Verbindung zwischen dem Zapfventil 12 der H₂-Tankstelle 4 und einer Tanköffnung 24 des wasserstoffbetriebenen Fahrzeugs 22 vorgesehen ist, kann insbesondere in Form eines Drucksensors und/oder eines Drehmomentsensors und/oder eines Kontaktsensors und/oder eines optischen Sensors, insbesondere einer Kamera ausgebildet sein. Der Sensor kann hierbei zudem insbesondere in Form eines sicherheitsgerichteten Sensors gebildet sein, der vorzugsweise die Sicherheitsanforderungen an die Sicherheitsnorm IEC 61508-1 erfüllt.

Um auch bei schlechten Lichtverhältnissen eine nicht ordnungsgemäße Verbindung zwischen einem Zapfventil 12 einer H₂-Tankstelle 4 und einer Tanköffnung 24 eines wasserstoffbetriebenen Fahrzeugs 22 detektieren zu können, kann auch zusätzlich eine vorliegend nicht dargestellte Beleuchtungseinheit, beispielsweise in Form einer LED oder dergleichen, vorgesehen sein.

Wie gemäß dem in Fig. 1 dargestellten Ausführungsbeispiel erkennbar, ist vorliegend noch eine externe Kamera 20 zur Überprüfung des Tankvorgangs vorgesehen, die wahlweise auch zur Kopplung und Entkopplung des Zapfventils 12 mit bzw. von der Tanköffnung 24 des wasserstoffbetriebenen Fahrzeugs 22 vorgesehen sein kann.

Die externe Kamera 20 kann hierbei beispielsweise auch zur Überprüfung anderer sicherheitsrelevanter Aspekte, wie beispielsweise zur Überprüfung des Gasschlauches 14 der H₂-Tankstelle zur Verhinderung einer übermäßigen und unsachgemäßen Belastung oder dergleichen vorgesehen sein.

Die H₂-Tankstelle 4 weist ferner ein Display 18 auf, über den dem Nutzer beispielsweise die abgegebene Gasmenge bzw. der aktuell erforderliche Preis für einen Tankvorgang mitgeteilt werden kann.

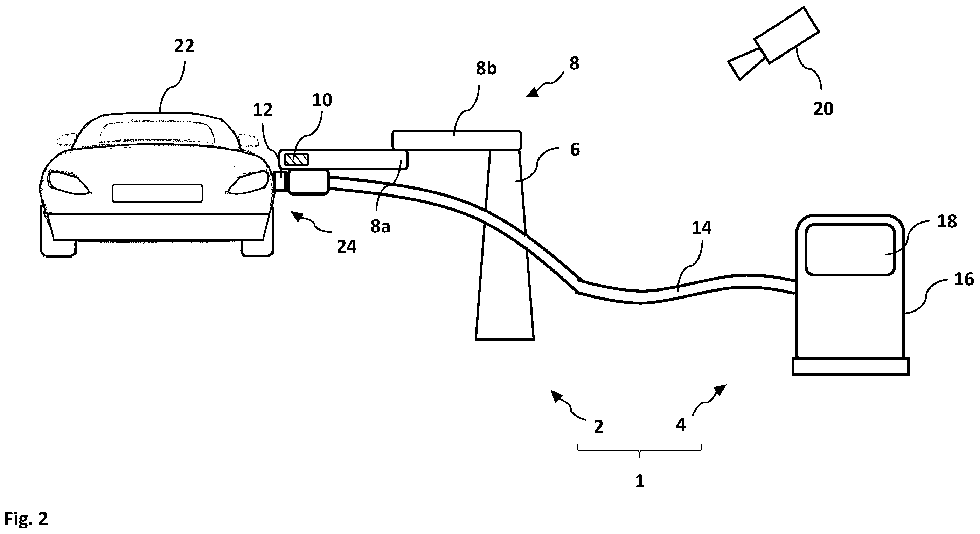

Fig. 2 zeigt eine schematische Darstellung eines Systems 1 zu Überprüfung eines Tankvorgangs an einer H₂-Tankstelle gemäß dem ersten Ausführungsbeispiel in einem zweiten Zustand.

Wie gemäß Fig. 2 erkennbar, ist in dem zweiten Zustand der Gasschlauch 14 über das Zapfventil 12 mit der Tanköffnung 24 des wasserstoffbetriebenen Fahrzeugs 22 verbunden. Zudem wird durch eine Bewegung des Verbindungselementes 8a gegenüber dem Verbindungselement 8b der Überprüfungseinheit 8 ein Abstand zu dem an der Tanköffnung 24 angeordneten Zapfventil 12 minimiert, vorliegend insbesondere ein Kontakt hergestellt, sodass über den Sensor 10 eine nicht ordnungsgemäße Verbindung zwischen dem Zapfventil 12 und der Tanköffnung 24 erkannt werden kann.

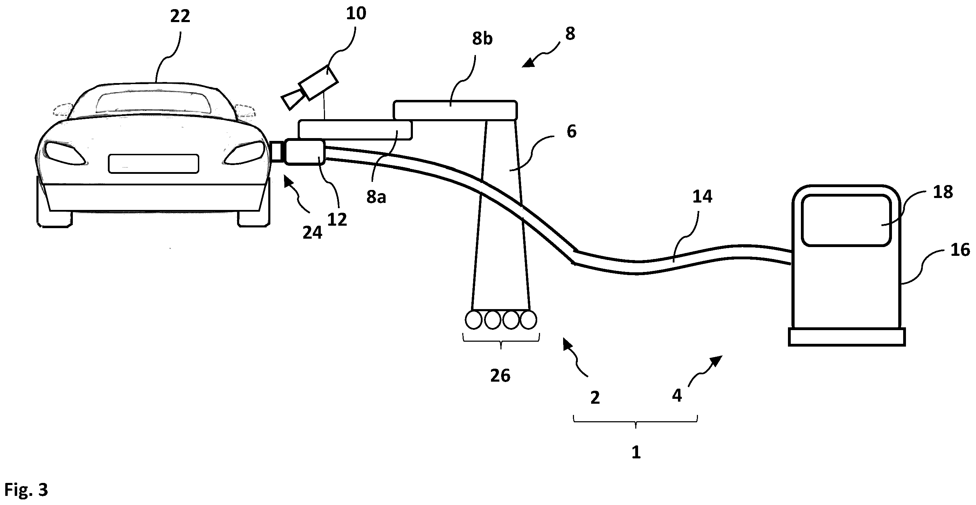

Fig. 3 zeigt eine schematische Darstellung eines erfindungsgemäßen Systems 1 zur Überprüfung eines Tankvorgangs an einer H₂-Tankstelle 4 gemäß einem zweiten Ausführungsbeispiel in einem zweiten Zustand.

Gemäß diesem zweiten Ausführungsbeispiel ist der Sensor 10 in Form eines optischen Sensors, nämlich in Form einer Kamera ausgebildet. Insbesondere über eine solche Ausführungsform kann nicht nur eine Überprüfung eines Tankvorgangs an einer H₂-Tankstelle 4, sondern auch zumindest ein Teil eines Tankvorgangs, beispielsweise ein Koppeln bzw. Entkoppeln des Zapfventils 12 an bzw. von der Tanköffnung 24 durch die Vorrichtung 2 gesteuert werden. Zudem weist die Vorrichtung 2 zur Überprüfung eines Tankvorgangs an einer H₂-Tankstelle 4 hier in Form von Rollen gebildete Bewegungselemente 26 zur Bewegung der Basiseinheit 6 relativ zu der H₂-Tankstelle 4 und dem wasserstoffbetriebenen Fahrzeug 22 auf.

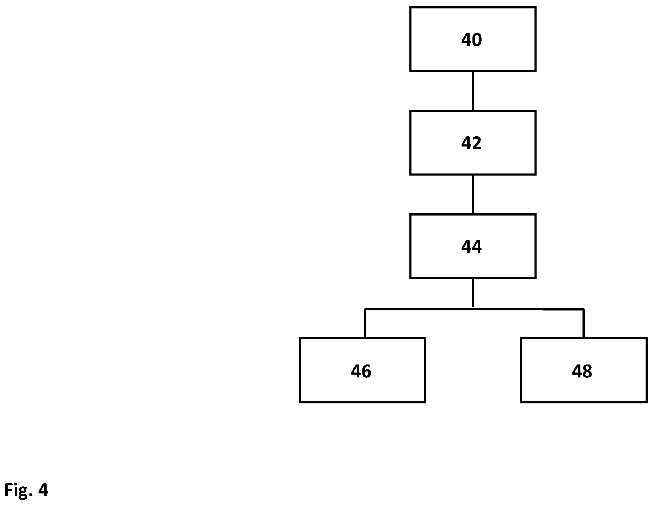

Fig. 4 zeigt eine schematische Darstellung der einzelnen Schritte eines erfindungsgemäßen Verfahrens zur Überprüfung eines Tankvorgangs an einer H₂-Tankstelle 4. Hierbei umfasst das erfindungsgemäße Verfahren die Schritte eines Erkennens 40 einer Anfrage zur Durchführung eines Tankvorgangs eines wasserstoffbetriebenen Fahrzeugs 22 an einer H₂-Tankstelle 4, eines Ansteuerns 42 einer Überprüfungseinheit 8 zur Minimierung eines Abstandes der Überprüfungseinheit 8 zu einem an einer Tanköffnung 24 des wasserstoffbetriebenen Fahrzeugs 22 angeordneten Zapfventil 12 der H₂-Tankstelle 4 sowie eines Überprüfens 44 einer Verbindung zwischen dem Zapfventil 12 der H₂-Tankstelle 4 und der Tanköffnung 24 des wasserstoffbetriebenen Fahrzeugs 22 vor Beginn der Durchführung des Tankvorgangs. In Abhängigkeit der Überprüfung der Verbindung zwischen dem Zapfventil 12 der H₂-Tankstelle 4 und der Tanköffnung 24 des wasserstoffbetriebenen Fahrzeugs 22 kann daraufhin entweder ein Freigeben 46 oder einen Abbrechen 48 eines Tankvorgangs erfolgen.

Mittels der erfindungsgemäßen Vorrichtung 2 bzw. des erfindungsgemäßen Systems 1 und des erfindungsgemäßen Verfahrens zur Überprüfung eines Tankvorgangs an einer H₂-Tankstelle 4 ist es insbesondere möglich, einen besonders sicheren Tankvorgang für eine Wasserstoffbetankung zur Verfügung zu stellen, der jeglichen Sicherheitsanforderungen genügt. Ferner ist es mittels der erfindungsgemäßen Überprüfung möglich, ein zumindest teilweise automatisiertes Verfahren zur Betankung von wasserstoffbetriebenen Fahrzeugen an einer H₂-Tankstelle 4 durchführen zu können.

### Bezugszeichenliste

- 1: System zur Überprüfung eines Tankvorgangs
- 2: Vorrichtung zur Überprüfung eines Tankvorgangs
- 4: H₂-Tankstelle
- 6: Basiseinheit
- 8: Überprüfungseinheit
- 8a: erstes Verbindungselement
- 8b: zweites Verbindungselement
- 10: Sensor
- 12: Zapfventil
- 14: Gasschlauch
- 16: Zapfsäule
- 18: Display
- 20: externe Kamera
- 22: wasserstoffbetriebenes Fahrzeug
- 24: Tanköffnung
- 26: Bewegungselemente

- 40: Erkennen einer Anfrage zur Durchführung eines Tankvorgangs
- 42: Ansteuern einer Überprüfungseinheit zur Minimierung eines Abstandes
- 44: Überprüfen einer Verbindung zwischen dem Zapfventil einer H₂-Tankstelle und der Tanköffnung eines wasserstoffbetriebenen Fahrzeugs
- 46: Freigeben eines Tankvorgangs
- 48: Abbrechen eines Tankvorgangs

## Patentansprüche

1. Vorrichtung (2) zur Überprüfung eines Tankvorgangs an einer H₂-Tankstelle (4), umfassend:
- eine Basiseinheit (6) zur Anordnung der Vorrichtung (2) an einem Untergrund, vorzugsweise in der Nähe zu der H₂-Tankstelle (4),
- eine an der Basiseinheit (6) angeordnete bewegbare Überprüfungseinheit (8) zur Überprüfung einer Verbindung zwischen einem Zapfventil (12) der H₂-Tankstelle (4) und einer Tanköffnung (24) eines wasserstoffbetriebenen Fahrzeugs (22),
- wobei die bewegbare Überprüfungseinheit (8) einen Sensor (10) umfasst, mittels dem eine nicht ordnungsgemäße Verbindung zwischen dem Zapfventil (12) der H₂-Tankstelle (4) und der Tanköffnung (24) des wasserstoffbetriebenen Fahrzeugs (22) erkennbar ist, wobei die Überprüfungseinheit (8) zumindest zwei miteinander verbundene Verbindungselemente (8a, 8b) zur Minimierung eines Abstandes zu dem wasserstoffbetriebenen Fahrzeug (22) aufweist, wobei die Verbindungselemente (8a, 8b) unabhängig gegeneinander drehbar gelagert sind, wobei unter einer nicht ordnungsgemäßen Verbindung zwischen dem Zapfventil (12) der H2-Tankstelle (4) und der Tanköffnung (24) des wasserstoffbetriebenen Fahrzeugs (22), eine unzureichend dichtende Verbindung verstanden wird, die bei einer Überführung von Wasserstoff aus der H2-Tankstelle (4) in das wasserstoffbetriebene Fahrzeug (22) eine Leckage verursachen würde.

2. Vorrichtung (2) nach Anspruch 1,
**dadurch gekennzeichnet,**
**dass** der Sensor (10) vorzugsweise an und/oder in einem der zumindest zwei miteinander verbundenen Verbindungselemente (8a, 8b) angeordnet ist.

3. Vorrichtung (2) nach einem der vorangehenden Ansprüche,
**dadurch gekennzeichnet,**
**dass** die Vorrichtung (2) als Roboter ausgebildet ist, wobei der Roboter neben einer Überprüfung eines Tankvorgangs an einer H₂-Tankstelle (4) auch zur zumindest teilweisen Durchführung eines Tankvorgangs zur Betankung mit Wasserstoff, insbesondere zur Kopplung des Zapfventils (12) an eine Tanköffnung (24) und/oder zur Entkopplung des Zapfventils (12) von einer Tanköffnung (24) eines wasserstoffbetriebenen Fahrzeugs (22) vorgesehen ist.

4. Vorrichtung (2) nach einem der vorangehenden Ansprüche,
**dadurch gekennzeichnet,**
**dass** die Vorrichtung (2) Bewegungselemente (26) zur Bewegung der Basiseinheit (6) relativ zu einer H₂-Tankstelle (4) und/oder einem wasserstoffbetriebenen Fahrzeug (22) aufweist, wobei die Bewegungselemente (26) vorzugsweise in Form von Füßen oder Rollen ausgebildet sind.

5. Vorrichtung (2) nach einem der vorangehenden Ansprüche,
**dadurch gekennzeichnet,**
**dass** der Sensor (10) in Form eines Drucksensors und/oder eines Drehmomentsensors und/oder eines Kontaktsensors und/oder eines optischen Sensors ausgebildet ist.

6. Vorrichtung (2) nach einem der vorangehenden Ansprüche,
**dadurch gekennzeichnet,**
**dass** der Sensor (10) in Form eines sicherheitsgerichteten Sensors ausgebildet ist, wobei der Sensor (10) insbesondere die Sicherheitsanforderungen an die Sicherheitsnorm IEC61508-1 erfüllt.

7. Vorrichtung (2) nach einem der vorangehenden Ansprüche,
**dadurch gekennzeichnet,**
**dass** eine Beleuchtungseinheit vorgesehen ist, wobei die Beleuchtungseinheit vorzugsweise an einem der Verbindungselemente (8a, 8b) der Überprüfungseinheit (8) angeordnet ist, wobei die Beleuchtungseinheit insbesondere als LED ausgebildet ist.

8. System (1) zur Überprüfung eines Tankvorgangs an einer H₂-Tankstelle (4), umfassend:
- eine H₂-Tankstelle (4),
- eine Vorrichtung (2) nach einem der vorangehenden Ansprüche,
- wobei die H₂-Tankstelle (4) aufweist:
- eine Zapfsäule (16) zur Bereitstellung von Wasserstoff,
- einen Gasschlauch (14) mit einem Zapfventil (12) zur Überführung von Wasserstoff aus der Zapfsäule (16) in eine Tanköffnung (24) eines wasserstoffbetriebenen Fahrzeugs (22),
- wobei die Vorrichtung zur Überprüfung eines Tankvorgangs an der H₂-Tankstelle (4) einen Sensor (10) umfasst, mittels dem eine nicht ordnungsgemäße Verbindung zwischen dem Zapfventil (12) der H₂-Tankstelle (4) und einer Tanköffnung (24) des wasserstoffbetriebenen Fahrzeugs (22) erkennbar ist.

9. System nach Anspruch 8,
**dadurch gekennzeichnet,**
**dass** eine externe Kamera (20) zur Überprüfung eines Tankvorgangs an der H₂-Tankstelle (4) und/oder zur Kopplung des Zapfventils (12) an eine Tanköffnung (24) und/oder zur Entkopplung des Zapfventils (12) von der Tanköffnung (24) eines wasserstoffbetriebenen Fahrzeugs (22) vorgesehen ist.

10. System nach einem der Ansprüche 8 oder 9,
**dadurch gekennzeichnet,**
**dass** ein Gaszähler zum Bereitstellen einer Gasabgabeinformation über die beim Tankvorgang abgegebene Gasmenge vorgesehen ist.

11. Verfahren zur Überprüfung eines Tankvorgangs an einer H₂-Tankstelle (4) unter Verwendung einer Vorrichtung (2) nach einem der Ansprüche 1-7 insbesondere unter Verwendung eines Systems (1) nach einem der Ansprüche 8-10, umfassend die Schritte:
- Erkennen (40) einer Anfrage zur Durchführung eines Tankvorgangs eines wasserstoffbetriebenen Fahrzeugs (22) an einer H₂-Tankstelle (4),
- Ansteuern (42) einer Überprüfungseinheit (8) zur Minimierung eines Abstandes der Überprüfungseinheit (8) zu einem an einer Tanköffnung (24) des wasserstoffbetriebenen Fahrzeugs (22) angeordneten Zapfventil (12) der H₂-Tankstelle (4),
- Überprüfen (44) einer Verbindung zwischen dem Zapfventil (12) der H₂-Tankstelle (4) und der Tanköffnung (24) des wasserstoffbetriebenen Fahrzeugs (22) vor Beginn der Durchführung des Tankvorgangs.

12. Verfahren nach Anspruch 11,
**dadurch gekennzeichnet,**
**dass** das Ansteuern (42) der Überprüfungseinheit (8) zur Minimierung eines Abstandes der Überprüfungseinheit (8) zu einem an einer Tanköffnung (24) des wasserstoffbetriebenen Fahrzeugs (22) angeordneten Zapfventil (12) der H₂-Tankstelle (4) ein Kontaktieren des Zapfventils (12) durch die Überprüfungseinheit (8) umfasst.

13. Verfahren nach Anspruch 11 oder 12,
**dadurch gekennzeichnet,**
**dass** in Abhängigkeit der Überprüfung (44) einer Verbindung zwischen dem Zapfventil (12) der H₂-Tankstelle (4) und der Tanköffnung (24) des wasserstoffbetriebenen Fahrzeugs (22) ein Tankvorgang freigegeben (46) oder abgebrochen wird (48).

14. Verfahren nach einem der Ansprüche 11 bis 13,
**dadurch gekennzeichnet,**
**dass** neben einem Überprüfen (44) eines Tankvorgangs an einer H₂-Tankstelle (4) ein Kuppeln und Entkuppeln eines Zapfventils (12) der H₂-Tankstelle (4) und der Tanköffnung (24) des wasserstoffbetriebenen Fahrzeugs (22) erfolgt.

## Claims

1. Device (2) for checking a refueling process on a H₂-filling station (4), comprising:
- a base unit (6) for positioning the device (2) on a surface, preferably in the vicinity of the H₂-filling station (4),
- a movable checking unit (8) arranged on the base unit (6) for checking a connection between a dispensing valve (12) of the H₂-filling station (4) and a tank opening (24) of a hydrogen-powered vehicle (22),
- wherein the movable checking unit (8) comprises a sensor (10) by means of which an improper connection between the dispensing valve (12) of the H₂-filling station (4) and the tank opening (24) of the hydrogen-powered vehicle (22) is recognizable, the checking unit (8) having at least two interconnected connecting elements (8a, 8b) for minimizing a distance to the hydrogen-powered vehicle (22), the connecting elements (8a, 8b) being mounted so as to be rotatable independently of one another, wherein an improper connection between the dispensing valve (12) of the H₂-filling station (4) and the tank opening (24) of the hydrogen-powered vehicle (22) is understood to mean an insufficiently sealing connection which would cause a leakage when hydrogen is transferred from the H₂-filling station (4) to the hydrogen-powered vehicle (22).

2. Device (2) according to claim 1,
**characterized in that**
the sensor (10) is preferably arranged on and/or in one of the at least two interconnected connecting elements (8a, 8b).

3. Device (2) according to one of the preceding claims,
**characterized in that**
the device (2) is designed as a robot, wherein the robot, in addition to checking a refueling process at an H₂-filling station (4), the robot is also provided for at least partially carrying out a refuelling operation for refuelling with hydrogen, in particular for coupling the dispensing valve (12) to a tank opening (24) and/or for decoupling the dispensing valve (12) from a tank opening (24) of a hydrogen-powered vehicle (22).

4. Device (2) according to one of the preceding claims,
**characterized in that**
the device (2) has movement elements (26) for moving the base unit (6) relative to an H₂-filling station (4) and/or a hydrogen-powered vehicle (22), wherein the movement elements (26) are preferably in the form of feet or rollers.

5. Device (2) according to one of the preceding claims,
**characterized in that**
the sensor (10) is in the form of a pressure sensor and/or a torque sensor and/or a contact sensor and/or an optical sensor.

6. Device (2) according to one of the preceding claims,
**characterized in that**
the sensor (10) is designed in the form of a safety-related sensor, the sensor (10) in particular fulfilling the safety requirements of the IEC61508-1 safety standard.

7. Device (2) according to one of the preceding claims,
**characterized in that**
an illumination unit is provided, the illumination unit preferably being arranged on one of the connecting elements (8a, 8b) of the checking unit (8), the illumination unit being designed in particular as an LED.

8. System (1) for checking a refueling process at an H₂-filling station (4), comprising:
- an H₂-filling station (4),
- a device (2) according to one of the preceding claims,
- where the H₂-filling station (4) comprises:
- a dispenser (16) for supplying hydrogen,
- a gas hose (14) with a dispensing valve (12) for transferring hydrogen from the dispenser (16) to a tank opening (24) of a hydrogen-powered vehicle (22),
- wherein the device for checking a refueling process at the H₂-filling station (4) comprises a sensor (10) by means of which an improper connection between the dispensing valve (12) of the H₂-filling station (4) and a tank opening (24) of the hydrogen-powered vehicle (22) can be detected.

9. System according to claim 8,
**characterized in that**
an external camera (20) for checking a refueling process on the H₂-filling station (4) and/or for coupling the dispensing valve (12) to a tank opening (24) and/or for decoupling the dispensing valve (12) from the tank opening (24) of a hydrogen-powered vehicle (22) is provided.

10. System according to any one of claims 8 or 9,
**characterized in that**
a gas meter is provided to provide gas delivery information on the quantity of gas delivered during the refueling process.

11. Method for checking a refueling process on an H₂-filling station (4) using a device (2) according to any one of claims 1 to 7, in particular using a system (1) according to any one of claims 8 to 10, comprising the steps of:
- recognizing (40) a request to perform a refueling operation of a hydrogen-powered vehicle (22) at an H₂-filling station (4),
- controlling (42) of a checking unit (8) for minimizing a distance of the checking unit (8) to a dispensing valve (12) of the H₂-filling station (4),
- checking (44) a connection between the dispensing valve (12) of the H₂-filling station (4) and the tank opening (24) of the hydrogen-powered vehicle (22) before starting the refueling process.

12. Method according to claim 11,
**characterized in that**
the controlling (42) of the checking unit (8) for minimizing a distance between the checking unit (8) and a dispensing valve (12) of the H₂-filling station (4) arranged at a tank opening (24) of the hydrogen-powered vehicle (22) comprises contacting the dispensing valve (12) by the checking unit (8).

13. Method according to claim 11 or 12,
**characterized in that**
depending on the checking (44) of a connection between the dispensing valve (12) of the H₂-filling station (4) and the tank opening (24) of the hydrogen-powered vehicle (22), a refueling process is enabled (46) or aborted (48).

14. Method according to any one of claims 11 to 13,
**characterized in that**
in addition to checking (44) a refueling process at an H₂-filling station (4), coupling and uncoupling of a dispensing valve (12) of the H₂-filling station (4) and the tank opening (24) of the hydrogen-powered vehicle (22) is performed.

## Revendications

1. Dispositif (2) de contrôle d'une opération de remplissage d'un réservoir de station-service H2 (4), comprenant
- une unité de base (6) pour placer le dispositif (2) sur un support, de préférence à proximité de la station-service H2 (4),
- une unité de contrôle mobile (8) disposée sur l'unité de base (6) pour contrôler une liaison entre une vanne de distribution (12) de la station-service H2 (4) et une ouverture de réservoir (24) d'un véhicule à hydrogène (22),
- dans lequel l'unité de contrôle mobile (8) comprend un capteur (10) permettant de détecter une connexion incorrecte entre la vanne de distribution (12) de la station-service H2 (4) et l'ouverture de réservoir (24) du véhicule à hydrogène (22), l'unité de contrôle (8) comprenant au moins deux éléments de liaison (8a, 8b) reliés l'un à l'autre pour minimiser une distance par rapport au véhicule à hydrogène (22), les éléments de liaison (8a, 8b) étant montés à rotation indépendamment l'un de l'autre, dans lequel on entend par connexion incorrecte entre la vanne de distribution (12) de la station-service H2 (4) et l'ouverture de réservoir (24) du véhicule à hydrogène (22), une connexion insuffisamment étanche qui provoquerait une fuite lors d'un transfert d'hydrogène de la station-service H2 (4) vers le véhicule à hydrogène (22).

2. Dispositif (2) selon la revendication 1,
**caractérisé en ce que**
le capteur (10) est disposé de préférence sur et/ou dans l'un des au moins deux éléments de liaison (8a, 8b) reliés entre eux.

3. Dispositif (2) selon l'une des revendications précédentes,
**caractérisé en ce que**
le dispositif (2) est réalisé sous la forme d'un robot, le robot effectuant, en plus d'un contrôle d'une opération de remplissage de réservoir de la station-service H2 (4), est également prévu pour l'exécution au moins partielle d'une opération de ravitaillement en hydrogène, en particulier pour le couplage de la vanne de distribution (12) à une ouverture de réservoir (24) et/ou pour le découplage de la vanne de distribution (12) d'une ouverture de réservoir (24) d'un véhicule à hydrogène(22).

4. Dispositif (2) selon l'une des revendications précédentes,
**caractérisé en ce que**
le dispositif (2) comporte des éléments de déplacement (26) pour déplacer l'unité de base (6) par rapport à une position de la station-service H2 (4) et/ou un véhicule à hydrogène (22), les éléments de déplacement (26) étant de préférence réalisés sous la forme de pieds ou de roulettes.

5. Dispositif (2) selon l'une des revendications précédentes,
**caractérisé en ce que**
le capteur (10) est réalisé sous la forme d'un capteur de pression et/ou d'un capteur de couple et/ou d'un capteur de contact et/ou d'un capteur optique.

6. Dispositif (2) selon l'une des revendications précédentes,
**caractérisé en ce que**
le capteur (10) est réalisé sous la forme d'un capteur orienté vers la sécurité, le capteur (10) remplissant en particulier les exigences de sécurité de la norme de sécurité IEC61508-1.

7. Dispositif (2) selon l'une des revendications précédentes,
**caractérisé en ce qu'**
il est prévu une unité d'éclairage, l'unité d'éclairage étant disposée de préférence sur l'un des éléments de liaison (8a, 8b) de l'unité de contrôle (8), l'unité d'éclairage étant réalisée en particulier sous forme de LED.

8. Système (1) de contrôle d'une opération de remplissage d'un réservoir de station-service H2 (4), comprenant
- une station-service H2 (4),
- un dispositif (2) selon l'une des revendications précédentes,
- la station-service H2 (4) comprenant:
- un distributeur (16) pour fournir de l'hydrogène,
- un tuyau de gaz (14) avec une vanne de distribution (12) pour transférer de l'hydrogène du distributeur (16) dans un ouverture de réservoir (24) d'un véhicule à hydrogène (22),
- dans lequel le dispositif de contrôle d'une opération de remplissage d'un réservoir de station-service H2 (4) comprend un capteur (10) permettant de détecter une connexion incorrecte entre la vanne de distribution (12) de la station-service H2 (4) et une ouverture de réservoir (24) du véhicule à hydrogène (22).

9. Système selon la revendication 8,
**caractérisé en ce qu'**
une caméra externe (20) est montée sur la station-service H2 (4) et/ou pour coupler la vanne de distribution (12) à une ouverture de réservoir (24) et/ou pour découpler la vanne de distribution (12) de l'ouverture de réservoir (24) d'un véhicule à hydrogène (22) est prévue.

10. Système selon l'une des revendications 8 ou 9,
**caractérisé en ce qu'**
un compteur de gaz est prévu pour fournir une information de distribution de gaz sur la quantité de gaz distribuée lors de l'opération de remplissage d'un réservoir.

11. Procédé de contrôle d'une opération de remplissage d'un réservoir d'un station-service H2 (4) utilisant un dispositif (2) selon l'une des revendications 1 à 7, en particulier utilisant un système (1) selon l'une des revendications 8 à 10, comprenant les étapes suivantes :
- détection (40) d'une demande d'exécution d'une opération de remplissage d'un réservoir en carburant d'un véhicule à hydrogène (22) à une station-service H2 (4),
- commande (42) d'une unité de contrôle (8) pour minimiser une distance de l'unité de contrôle (8) par rapport à une vanne de distribution (12) de la station-service H2 (4),
- vérifier (44) une connexion entre la vanne de distribution (12) de la station-service H2 (4) et l'ouverture de réservoir (24) du véhicule à hydrogène (22) avant le début de l'exécution de l'opération de remplissage d'un réservoir de la station-service H2 (4).

12. Procédé selon la revendication 11,
**caractérisé en ce que**
la commande (42) de l'unité de contrôle (8) pour minimiser la distance entre l'unité de contrôle (8) et une vanne de distribution (12) de la station-service H2 (4) disposée au niveau d'une ouverture de réservoir (24) du véhicule à hydrogène (22) comprend une mise en contact de la vanne de distribution (12) par l'unité de contrôle (8).

13. Procédé selon la revendication 11 ou 12,
**caractérisé en ce qu'**
en fonction de la vérification (44) d'une liaison entre la vanne de distribution (12) de la station-service H2 (4) et l'ouverture de réservoir (24) du véhicule à hydrogène (22), une opération de remplissage est autorisée (46) ou interrompue (48).

14. Procédé selon l'une quelconque des revendications 11 à 13,
**caractérisé en ce qu'**
un accouplement et un désaccouplement d'une vanne de distribution (12) de la station-service H₂ (4) et de l'ouverture de réservoir (24) du véhicule à hydrogène (22) s'effectue en plus d'une vérification (44) d'une opération de ravitaillement dans la station-service H2 (4).
